# EUROPÄISCHE PATENTANMELDUNG

(11) **EP 1 100 058 A1**
(43) Veröffentlichungstag der Anmeldung: **16.05.2001**
(21) Anmeldenummer: 99122592.1
(22) Anmeldetag: 12.11.1999
(51) Int. Cl.: G07F 7/12, G06K 19/073

(54) **Elektronisches Bauelement und Verfahren zum Schützen einer in dem Bauelement enthaltenen integrierten Schaltung**

(71) Anmelder: Infineon Technologies AG, 81669 München (DE)
(72) Erfinder: Smola, Michael, 80636 München (DE); Aumueller, Christian, 82362 Weilheim (DE)
(74) Vertreter: Hermann, Uwe, Dipl.-Ing.

(57) **Zusammenfassung**

Es ist ein elektronisches Bauelement vorgesehen, das zumindest einen ersten integrierten Schaltkreis mit einer bestimmten Funktionalität aufweist. Auf dem integrierten Schaltkreis ist eine optische Anordnung vorgesehen, die aus einem Lichtsendeelement und einem Lichtempfangselement und einer dazwischenliegenden optischen Strecke besteht. Bei einer Störung der optischen Strecke wird die Funktionalität der integrierten Schaltung verändert.

## Beschreibung

Die Erfindung betrifft ein elektronisches Bauelement gemäß Patentanspruch 1 und ein Verfahren zum Schützen einer in dem Bauelement enthaltenen integrierten Schaltung gemäß Patentanspruch 5.

Hochintegrierte Schaltungen, wie sie heutzutage in der Mikroelektronik hergestellt werden, sind nur mit erheblichem Aufwand analysierbar. Einzelne Funktionsblöcke sind jedoch nach wie vor mit vertretbarem Aufwand identifizierbar. Kriminelle Gruppen versuchen zunehmend sicherheitsrelevante integrierte Schaltungen, wie sie in Verschlüsselungsgeräten, Bankautomaten, Chipkarten wie beispielsweise Telefonkarten, Geldkarten, Ausweiskarten vorgesehen sind, zu analysieren. Dabei werden mit Sensoren versucht auf den integrierten Schaltungen abgespeicherte Daten zu erfassen oder zu manipulieren. Ziel solcher Angriffe ist es beispielsweise ein Schlüsselwort zu ermitteln oder den Wert von Geldkarten zu verändern oder geheime Daten zu erfahren.

Um dies zu verhindern, sind bereits unterschiedliche Verfahren zum Schutz von sicherheitsrelevanten integrierten Schaltungen bekannt. Eine bereits seit längerer Zeit bekannte Methode ist es hierbei, den integrierten Schaltkreis mit einer metallischen Schicht abzuschirmen.

Nachteil einer solchen Anordnung allein ist es, daß eine solche metallische Schicht entfernbar ist, und daß nach einem solchen Entfernen der vorgesehene Schutz nicht mehr vorhanden ist.

Aufgabe der Erfindung liegt nun darin, ein elektronisches Bauelement mit zumindest einer ersten integrierten Schaltung vorzusehen, bei dem mit einfachen Mitteln die Funktionalität der integrierten Schaltung verändert wird, wenn versucht wird mit Sensoren Inhalte der integrierten Schaltung zu erfassen oder zu manipulieren. Diese Aufgabe wird erfindungsgemäß mit dem elektronischen Bauelement gemäß Patentanspruch 1 bzw. dem Verfahren nach Patentanspruch 5 gelöst.

Durch das Überwachen einer optischen Strecke wird erkannt, wenn diese ihren vorgesehenen Zustand verändert. Als Folge kann beispielsweise das Bauelement gesperrt werden. Dies bedeutet, daß sobald eine Meßsonde die optische Strecke unterbricht, ein solches Sperren erfolgt. Eine weitere Möglichkeit ist, daß eine normal unterbrochene optische Strecke durch Brechung von Licht an einer solchen Sonde überbrückt wird und dies vom Lichtempfangselement erfaßt wird. In diesem Fall führt das Auftreffen von Lichtstrahlen auf dem Lichtempfangselement zu einer Disaktivierung bzw. Sperren der integrierten Schaltung.

Werden zwei oder mehrere integrierte Schaltungen direkt übereinanderliegend angeordnet, um zu verhindern, daß beide integrierte Schaltungen getrennt voneinander betrieben werden, wird die elektronische Strecke vertikal durch die Anordnung geführt. Beim Trennen der vertikal angeordneten integrierten Schaltungen wird eine Unterbrechung erfasst und kann zum Sperren zumindest eines der Bauelemente führen.

Weiterhin ist es möglich, das ausgesandte Licht mit einer Modulation zu versehen, wobei der Betrieb der integrierten Schaltung nur so lange gewährleistet bleibt, wie die Modulation am Lichtempfangselement mit der am Lichtsendeelement übereinstimmt. Ein Vorteil der zuvor beschriebenen Ausgestaltung der Erfindung ist ebenfalls darin zu sehen, daß bereits das Einfallen von Streulicht in ein geöffnetes Bauelement ist, zu einer sperrenden integrierten Schaltung führt.

Nachfolgend wird die Erfindung unter Bezugnahme auf die Zeichnungen im einzelnen erläutert.

Es zeigen:
- Fig. 1: ein erstes erfindungsgemäßes Ausführungsbeispiel,
- Fig. 2: ein Anwendungsbeispiel des ersten Ausführungsbeispiels,
- Fig. 3: ein zweites Anwendungsbeispiel des ersten Ausfährungsbeispiels,
- Fig. 4: ein zweites Ausführungsbeispiel,
- Fig. 5: ein drittes erfindungsgemäßes Ausführungsbeispiel,
- Fig. 6: eine Weiterbildung der vorhergehenden erfindungsgemäßen Ausbildungen,
- Fig. 7: ein viertes erfindungsgemäßes Ausführungsbeispiel, und
- Fig. 8: ein fünftes erfindungsgemäßes Ausführungsbeispiel.

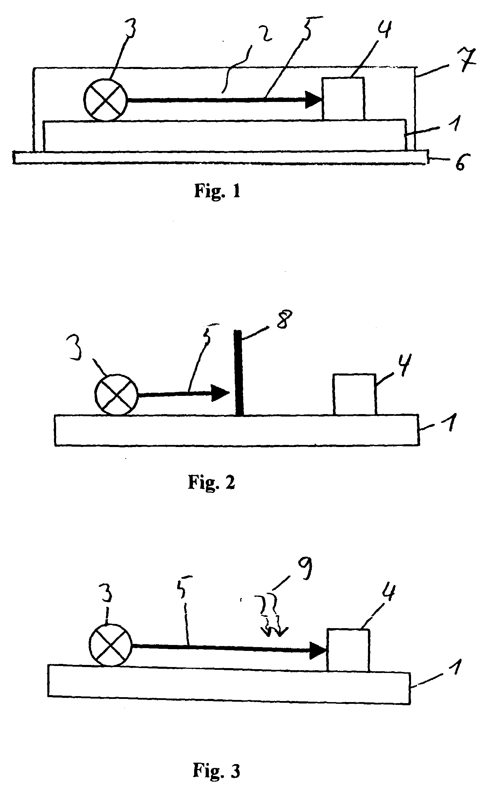

In Fig. 1 ist ein erstes erfindungsgemäßes Ausführungsbeispiel dargestellt. Ein integrierter Schaltkreis 1, beispielsweise ein Halbleiterchip, ist auf einem Träger 6 angeordnet. Weiterhin ist eine Abdeckung 7 vorgesehen, die zusammen mit dem Träger 6 den integrierten Schaltkreis 1 vollständig umschließt. Diese Anordnung kann beispielsweise ein Bauelement üblicher Bauform sein, wobei die Anschlußkontakte nicht dargestellt sind. Diese Anordnung kann jedoch auch ein übliches Chipkartenmodul sein. In beiden Fällen ist das Ausführungsbeispiel nicht auf eine Abdeckung 7 in Kappenform beschränkt, sondern kann auch als Gußmasse oder Preßmasse ausgebildet sein. An der Oberfläche der integrierten Schaltung 1 ist ein Lichtsendeelement 3 vorgesehen. Dieses Lichtsendeelement ist beispielsweise eine Licht im sichtbaren oder aber auch nicht sichtbaren Wellenbereich aussendet. Dieses ausgesandte Licht wird über eine optische Strecke 5 zu einem Lichtempfangselement 4 geführt, das ebenfalls aus der Oberfläche der integrierten Schaltung 1 angeordnet ist. Die integrierte Schaltung 1 betreibt das Lichtsendeelement 3 und überprüft in diesem ersten Ausführungsbeispiel, ob das Lichtempfangselement 4 das vom Lichtsendeelement 3 ausgesandten Licht empfängt.

In dem in Fig. 2 dargestellten Fall ist ein nadelförmige Testelement 8 auf der Oberfläche der integrierten Schaltung 1 aufgesetzt und unterbricht dabei die optische Strecke 5. Somit wird das vom Lichtsendeelement 3 ausgesandte Licht nicht mehr vom Lichtempfangselement 4 empfangen. Die integrierte Schaltung 1 erkennt, daß die optimale Strecke 3 beeinträchtigt ist und veranlaßt, daß der Betrieb der integrierten Schaltung 1 eingestellt wird. Gleiches gilt, wenn die optische Strecke nur teilweise unterbrochen ist.

Für dieses Ausführungsbeispiel, genauso wie für alle nachfolgenden Ausführungsbeispiele ist es möglich, daß nicht nur der Betrieb der integrierten Schaltung gesperrt wird, sondern auch daß veranlaßt wird, daß bestimmte in der integrierten Schaltung gespeicherten Daten gelöscht werden. Eine weitere Möglichkeit wäre, daß der Betrieb der integrierten Schaltung nur in einem eingeschränkten Maß weitergeführt wird.

Im zweiten Ausführungsbeispiel, das in Fig. 3 dargestellt ist, sind im Vergleich zum ersten Ausführungsbeispiel gleiche Elemente mit gleichen Bezugszeichen versehen. Bei diesem Ausführungsbeispiel wird vom Lichtempfangselement 4 nach dem Wegfall der Abdeckung 7 zusätzlich auffallendes Licht 9 erfaßt, was in der integrierten Schaltung 1 dazu führt, daß diese ihren Betrieb einstellt oder ihre Funktionalität entsprechend dem vorhergehenden Ausführungsbeispiel ändert.

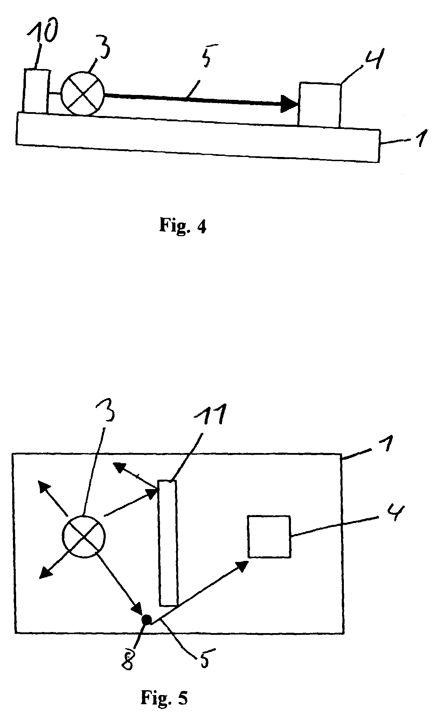

In dem Ausführungsbeispiel, das in Fig. 4 dargestellt ist, wird das von der Lichtsendeeinrichtung 3 ausgesandte und über die optische Strecke 5 zum Lichtempfangselement 4 gestrahlte Licht mit einer Modulationsvorrichtung 10 moduliert. Die integrierte Schaltung 1 sieht demnach Informationen vor, mit denen das Lichtsendeelement und das von diesem ausgestrahlte Licht moduliert wird. Geht durch eine Beeinträchtigung der optischen Strecke 5 Information verloren, so wird dies von der integrierten Schaltung 1 über das Lichtempfangselement 4 erfaßt. Auch in einem solchen Fall wird die Funktionalität der integrierten Schaltung bzw. deren Betriebszustand verändert.

Eine weitere Ausgestaltung dieses Ausführungsbeispiels kann darin liegen, daß eine Laufzeitmessung der Information vom Lichtsendeelement und Lichtempfangselement durchgeführt wird. In einem solchen Fall führt, um unbemerkt an die Oberfläche der integrierten Schaltung heranzukommen, über die die optische Strecke führt, ein Umlenken der optischen Strecke 5 dazu, daß sich die Laufzeit verändert. Dies wird von der integrierten Schaltung als versuchter Angriff auf die integrierte Schaltung erkannt und führt wiederum zu den gleichen bereits oben beschriebenen Folgen.

Fig. 5 zeigt ein weiteres Ausführungsbeispiel, wobei diesmal die Draufsicht auf die Anordnung dargestellt ist. Auf der Oberfläche der integrierten Schaltung 1 ist wiederum ein Lichtsendeelement 3 und ein Lichtempfangselement angeordnet. Zwischen diesen ist eine optische Sperre 11 vorgesehen. Im normal Fall befindet sich das Lichtempfangselement 4 im optischen Schatten der optischen Sperre 11. Licht, das auf die optische Sperre 11 fällt wird reflektiert und zurückgestrahlt. Licht, das an den Rand der integrierten Schaltung 1 gelangt, wird dort absorbiert.

Nun ist in einem Randbereich der integrierten Schaltung 1 wiederum eine nadelförmige Meßsonde 8 dargestellt, die auf die Oberfläche der integrierten Schaltung 1 aufgesetzt ist. Lichtstrahlen, die normalerweise vom Lichtsendeelement 3 zum Rand der integrierten Schaltung 1 gelangen und dort absorbiert werden, werden nunmehr am Meßelement 8 gestreut und an der optischen Sperre 11 vorbei geleitet. Es bildet sich durch dieses Meßelement 8, mit dem ein Angriff auf die Oberfläche der integrierten Schaltung vorgenommen werden soll eine lichtführende optische Strecke 5 auf, die vom Lichtempfangselement 4 empfangen wird. Dieser Aufbau der optischen Strecke 5 wird von der integrierten Schaltung 1 erfaßt und als Angriff erkannt. Auch dieser Fall führt zu den bisher beschriebenen Folgen.

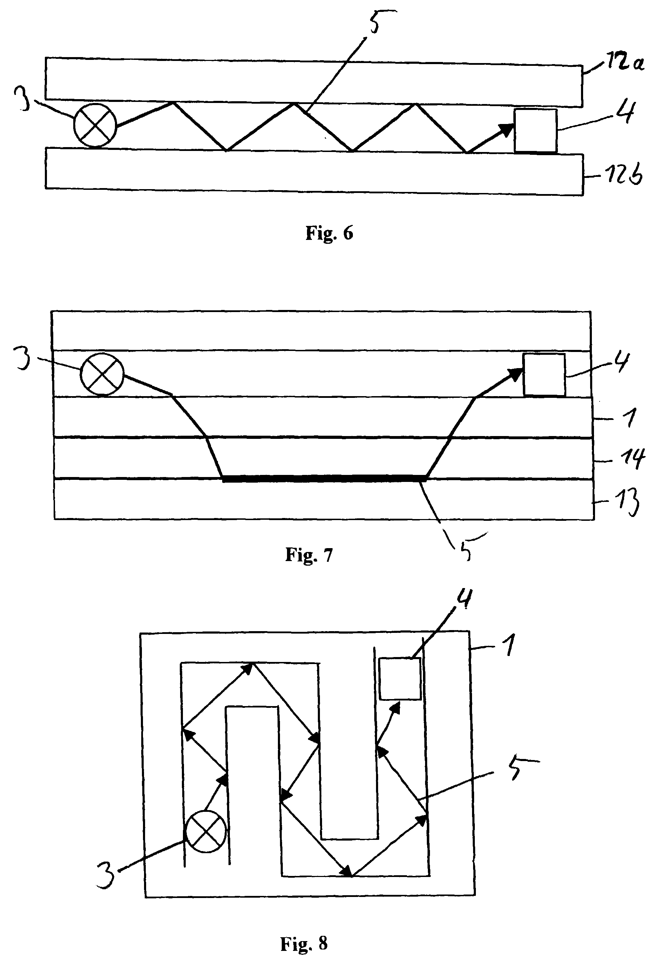

In Fig. 6 ist eine weitere Ausgestaltung der optischen Strekke 5 dargestellt. Hierbei ist eine Lichtleitstrecke, die oben und unten durch das lichtreflektierende lichtleitende Elemente 12a und 12b begrenzt ist, gebildet. An diesen Elementen 12a und 12b wird das Licht reflektiert und es bildet sich somit die optische Strecke 5 zwischen den Lichtsendeelement 3 und den Lichtempfangselement 4 aus. In dem Fall, daß ein Angriff auf die hier nicht weiter dargestellte integrierte Schaltung durch Bohren der Elemente 12a und 12b erfolgt, wird die optische Strecke 5 gestört. Dies wird mittels des Lichtempfangselement einer integrierten Schaltung mit den bereits bekannten Folgen erkannt. Um das Durchbohren der optischen Strecke 5 zu erschweren, können auch mehrere Schichten vorgesehen sein, wie in Fig. 7 dargestellt ist. Hierbei wird die optische Strecke 5 vertikal aus der Ebene, in der Lichtsendeelement 3 und Lichtempfangselement 4 liegen herausgeleitet. Eine Störung dieser Schichtanordnung würde wiederum zu einer Störung der optischen Strecke 5 führen.

Diese Anordnung kann auch dafür verwendet, daß zwei integrierte Schaltungen 1 und 13 vertikal übereinanderliegend miteinander verbunden sind und nur in dieser Anordnung betreibbar sein sollen. Die optische Strecke 5 wird durch die integrierte Schaltung 1 hindurch aufgebaut, auf die Oberfläche einer zweiten integrierten Schaltung 13 geführt, und nach einer gewissen zurückgelegten Strecke wieder zum Lichtempfangselement 4 zurückgeführt, das auf der Oberfläche der ersten integrierten Schaltung 1 angeordnet ist. Hierzu müssen optische Durchgänge durch die integrierte Schaltung vorhanden sein. Die lichtführende Ebene 14, die auf der Oberfläche der zweiten integrierten Schaltung 13 ausgebildet ist, muß in der horizontalen Ausdehnung entlang der optischen Strecke 5 von der Zusammensetzung der optischen Dichte so gestaltet sein, daß es zur dargestellten Umleitung der optischen Strecke 5 kommt.

Die in Fig. 7 dargestellte Anordnung hat zur Folge, daß die optische Strecke 5 beim Trennen der ersten integrierten Schaltung 1 von der zweiten integrierten Schaltung 13 unterbrochen wird, was wiederum die zuvor beschriebenen unterschiedlichen Folgen hat.

Die Ausnutzung optischleitender Elemente kann zu der in Fig. 8 dargestellten Ausgestaltung genutzt werden. Hierbei wird die optische Strecke 5 mäanderförmig über die integrierte Schaltung 1 geführt, um eine große Fläche der integrierten Schaltung abzudecken und zu schützten.

Weiterhin sind alle Kombinationen der dargestellten Ausgestaltung der Erfindung denkbar und vom selben Erfindungsgedanken umfaßt.

## Patentansprüche

1. Elektronisches Bauelement mit zumindest einer ersten integrierten Schaltung (1), die eine bestimmte Funktionalität aufweist, und einer optischen Anordnung, die aus einem Lichtsendeelement (3), einem Lichtempfangselement (4) und einer dazwischenliegenden optischen Strecke besteht, wobei die optische Anordnung auf zumindest einer Oberfläche der integrierten Schaltung (1) derart ausgebildet ist, daß eine Störung optischer Eigenschaften der optischen Anordnung (5) die Funktionalität der integrierten Schaltung (1) dauerhaft verändert.

2. Elektronisches Bauelement nach Anspruch 1, bei dem zumindest die optische Strecke (5) von eine erste Verlaufsebene in eine zweite Verlaufsebene wechselt.

3. Elektronisches Bauelement nach Anspruch 2, bei dem die zweite Verlaufsebene eine Oberfläche einer zweiten integrierten Schaltung (13) ist, die mit der ersten integrierten Schaltung (1) vertikal übereinanderliegend verbunden ist.

4. Elektronisches Bauelement nach einen der vorhergehenden Ansprüche, bei dem das von dem Lichtsendeelement (3) über die optische Strecke (5) zum Lichtempfangselement (4) geführte Licht moduliert ist.

5. Verfahren zum Schützen einer integrierten Schaltung, bei dem über die Oberfläche der integrierten Schaltung ein Lichtstrahl geführt wird, die Anwesenheit des Lichtstrahls überwacht, und bei Abwesenheit oder Anwesenheit des Lichtstrahls der Betrieb des integrierten Schaltkreises unterbrochen wird.
